# FASCICULE DE BREVET EUROPEEN

(11) **EP 1 319 532 B1**
(45) Date de publication et mention de la délivrance du brevet: **13.09.2006**
(21) Numéro de dépôt: 02293018.4
(22) Date de dépôt: 06.12.2002
(51) Int. Cl.: B60D 1/14

(54) **Agencement pour la fixation sur un longeron creux d'un organe d'attelage à un élément de remorquage, ou d'arrimage, d'un véhicule automobile**
Anordnung zur Befestigung an einem Hohlträger von einer Kupplungsvorrichtung an einem Schlepp- oder Verankerungsteil eines Kraftfahrzeuges
Arrangement for fastening on a hollow beam of a hitch element to a towing or anchoring member of a motor vehicle

(30) Priorité: 13.12.2001 FR 0116135
(43) Date de publication de la demande: 18.06.2003
(73) Titulaire: Renault s.a.s., 92100 Boulogne Billancourt (FR)
(72) Inventeur: Berville, Christian, 76480 Saint Romain de Colbosc (FR); Hlubina, Thierry, 75015 Paris (FR)

(56) Documents cités:
- EP-A- 1 070 607
- DE-A- 10 041 063
- US-A- 4 426 100
- US-A- 4 431 212
- US-A- 6 158 760

## Description

L'invention concerne un agencement sur un longeron creux de véhicule automobile d'un organe d'attelage du véhicule automobile à un élément de remorquage ou d'arrimage.

L'invention concerne plus particulièrement un agencement du type comportant une première partie de fixation fixée par soudage sur une face du longeron et une deuxième partie d'accrochage destinée à recevoir l'élément de remorquage ou d'arrimage.

Généralement, les véhicules automobiles sont munis d'organes d'attelage. Ces organes d'attelage permettent par exemple l'arrimage du véhicule automobile sur un camion de transport ou encore le remorquage du véhicule en cas de panne.

Pour ce faire, il est connu de fixer par soudage sur un longeron inférieur, et généralement à l'arrière du véhicule automobile, un organe d'attelage permettant l'accrochage d'un élément de remorquage ou d'arrimage. L'organe d'attelage est en général fixé sur une plaque intermédiaire de renfort qui est elle-même fixée par soudage sur une face extérieure du longeron. Selon une autre conception connue, la plaque intermédiaire de fixation est réalisée en une seule pièce avec l'organe d'attelage.

Le principal inconvénient de ce type d'assemblage est qu'il est relativement compliqué d'en assurer la protection contre la corrosion. En effet, les traitements anticorrosion classiques, tels que les traitements par cataphorèse, pénètrent de façon insatisfaisante au niveau des surfaces de contact entre les tôles. Pour obtenir une protection acceptable contre la corrosion, il faut déposer des cordons de mastic autour des plaques intermédiaires de renfort et autour des zones soudées, ce qui, d'un point de vue industriel, est compliqué à mettre en oeuvre.

De plus, le soudage de l'organe d'attelage nécessite des opérations de positionnement, de maintien en position, puis de soudage sur le longeron qui sont longues et coûteuses.

Ainsi le document US 4 426 100 divulgue un agencement sur un longeron creux de caisse d'un véhicule automobile d'un organe d'attelage à un élément de remorquage ou d'arrimage du véhicule, du type comportant une première partie de fixation fixée par soudage par rapport au longeron, et une deuxième partie d'accrochage destinée à recevoir l'élément de remorquage ou d'arrimage.

Dans le but de fournir une solution aux problèmes évoqués ci-dessus, l'invention propose un agencement selon les revendications jointes.

D'autres caractéristiques et avantages de l'invention apparaîtront à la lecture de la description détaillée qui suit pour la compréhension de laquelle on se reportera aux dessins annexés parmi lesquels :
- la figure 1 est une vue en perspective éclatée qui représente les principaux composants d'un agencement d'organes d'attelage à l'intérieur d'un longeron de véhicule automobile réalisé conformément aux enseignements de l'invention ;
- la figure 2 est une vue en perspective qui représente l'agencement de la figure 1 en position assemblée ;
- la figure 3 est une vue en section transversale suivant le plan vertical de coupe 3-3 de la figure 2.

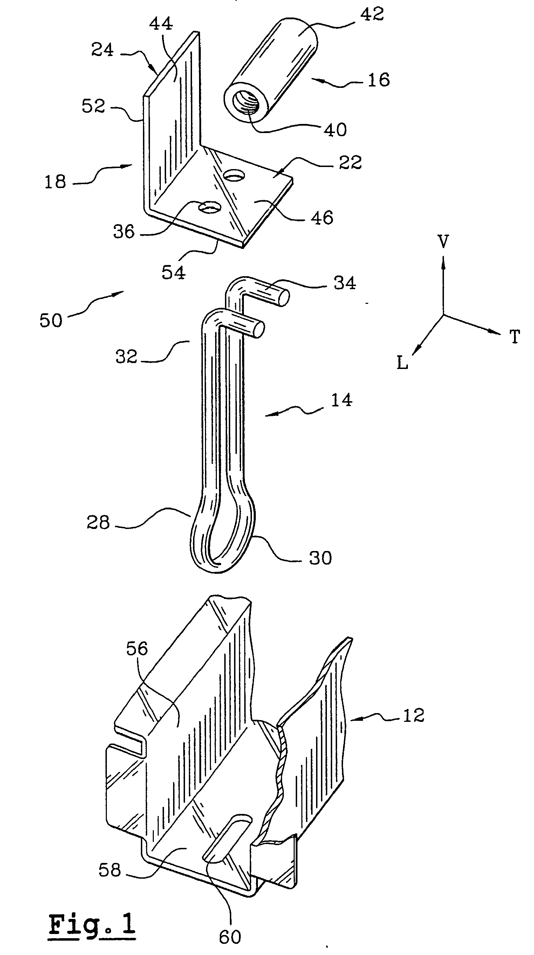

Dans la description qui va suivre, on adoptera à titre non limitatif une orientation verticale, longitudinale et transversale selon l'orientation traditionnellement utilisée dans l'automobile et indiquée par le trièdre L, V, T de la figure 1.

La figure 1 représente les composants de l'agencement 10 qui est réalisé conformément aux enseignements de l'invention. Il comporte notamment un longeron 12 inférieur d'un véhicule automobile. Il s'agit ici d'un profilé longitudinal à section en U dont seul un tronçon d'extrémité arrière est représenté. Ce longeron 12 est ici destiné à recevoir deux organes d'attelage 14 et 16, qui sont dédiés respectivement à l'arrimage et au remorquage du véhicule automobile.

L'agencement 10 comporte également une cornière 18 qui est intercalée entre le longeron 12 et les organes d'attelage 14 et 16. La cornière 18 est une plaque intermédiaire de fixation à section en L. Elle comporte une aile horizontale 22 et une aile verticale 24. La cornière 18 est destinée à servir de support de fixation aux organes d'attelage 14 et 16, puis à être agencée dans le longeron 12.

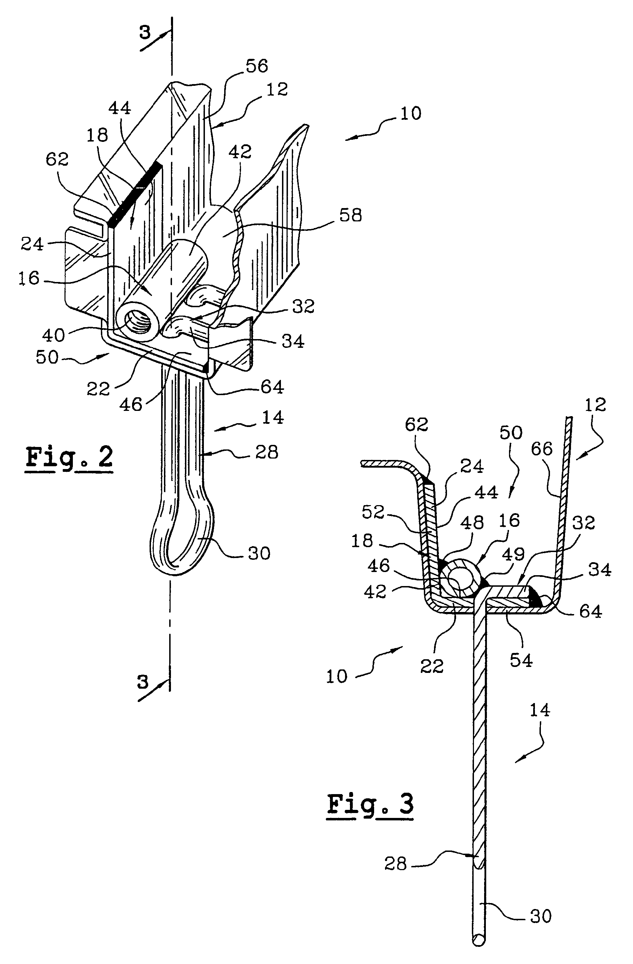

L'organe d'attelage 14 est un anneau d'arrimage, ici formé par un fil métallique recourbé en épingle. Il comporte, dans une première partie inférieure d'accrochage 28, une boucle 30 destinée à recevoir un crochet d'arrimage (non représenté). Il comporte également, dans une deuxième partie supérieure de fixation 32 à la cornière 18, des extrémités 34 qui sont pliées horizontalement de manière perpendiculaire au plan longitudinal et vertical dans lequel s'étend la boucle 30. Les extrémités 34 sont introduites dans deux trous 36 prévus à cet effet dans l'aile horizontale 22 de la cornière 18 comme illustré sur les figures 2 et 3. Les extrémités 34 sont fixées par soudage sur la face supérieure horizontale 46 de l'aile 22 de la cornière 18 comme on peut le voir sur la figure 3.

L'organe d'attelage 16 est une douille de remorquage comportant un taraudage 40 et une surface cylindrique externe 42. Le taraudage 40 est destiné à recevoir le bout fileté d'un élément de remorquage (non représenté). La surface cylindrique externe 42 de la douille 16 est en appui sur deux faces internes 44 et 46 des ailes 22 et 24 de la cornière 18 et elle est fixée par deux cordons de soudure longitudinaux 48 et 49 comme illustré par la figure 3. L'axe de la douille de remorquage est ainsi orienté longitudinalement et son extrémité est à proximité d'une extrémité longitudinale ouverte du longeron pour permettre le vissage du bout fileté de l'élément de remorquage.

Les deux organes d'attelage 14 et 16 fixés sur la cornière 18 constituent un sous-ensemble 50 qui est agencé dans le longeron 12. Deux faces externes 52 et 54 des ailes de la cornière 18 sont en appui respectivement sur les surfaces intérieures d'un flanc vertical 56 et de l'âme horizontale 58 du longeron 12. Un trou oblong, ou boutonnière 60, réalisé dans le fond du longeron 12 permet le passage de l'anneau d'arrimage 14. La cornière 18 est fixée par soudage sur le longeron 12 grâce à des cordons de soudures 62 et 64 (voir figures 2 et 3).

Après fixation du sous-ensemble 50, un traitement contre la corrosion est effectué, notamment sur les surfaces intérieures 56, 58 et 66 du longeron 12, par dépôt d'une couche de revêtement étanche, par exemple de la cire. Ce traitement intervenant après la fixation du sous-ensemble 50, la couche de revêtement étanche recouvre également la partie des organes d'attelage 14 et 16 et de leurs moyens de fixation par soudage situés à l'intérieur du longeron 12. Pour parfaire la résistance à la corrosion de l'agencement 10, un cordon de mastic peut être déposé à l'extérieur du longeron 12 au niveau du trou oblong 60.

Selon ce mode de réalisation, les organes d'attelage 14 et 16 sont d'abord fixés par soudage sur la cornière 18 pour constituer le sous-ensemble 50. Le sous-ensemble 50 est ensuite positionné à l'intérieur du longeron 12 par l'introduction de l'anneau d'arrimage 14 dans le trou oblong 60. Le soudage du sous-ensemble 50 à l'intérieur du longeron 12 ne requiert ainsi pas d'opération préalable de maintien en position.

Selon un autre mode de réalisation, non représenté, la cornière 18 est prolongée par une troisième aile à partir de l'aile horizontale 22, en vis-à-vis de l'aile verticale 24, pour lui conférer un profil en U complémentaire du profil interne en U du longeron 12.

Selon un autre mode de réalisation non représenté, la cornière 18 de l'agencement 10 peut en outre servir de support pour fixer d'autres éléments sur le longeron 12. On peut par exemple fixer un support de pot d'échappement sous le longeron 12. A cet effet, un trou est réalisé dans le fond du longeron 12 et dans l'aile horizontale 22 de la cornière 18. Une vis d'axe vertical, et solidaire du support de pot d'échappement, est introduite dans le trou puis maintenue en position par un écrou vissé agencé à l'intérieur du longeron 12. Afin de procurer à l'ensemble formé par l'agencement 10 et le support de pot d'échappement une raideur plus grande, la cornière 18 pourra avantageusement être réalisée avec une section en U.

A titre de variante, non représentée, il est possible de souder les organes d'attelage 14 et 16 directement à l'intérieur du longeron 12, c'est-à-dire sans plaque intermédiaire de fixation.

Selon une autre variante non représentée, l'anneau d'arrimage 14 peut-être réalisé en une seule pièce avec l'aile horizontale 22 de la cornière 18 ou plaque intermédiaire de fixation.

Le principe d'agencement selon l'invention trouve aussi à s'appliquer pour un seul organe d'attelage 14 ou 16.

## Revendications

1. Agencement (10) pour la fixation sur un longeron (12) creux de caisse d'un véhicule automobile d'un organe d'attelage (14, 16) à un élément de remorquage ou d'arrimage du véhicule, du type comportant une première partie de fixation (32, 42) fixée par soudage par rapport au longeron (12), et une deuxième partie d'accrochage (28, 40) destinée à recevoir l'élément de remorquage ou d'arrimage,
**Caractérisé en ce que** la première partie de fixation (32, 42) est située à l'intérieur du longeron (12), et **en ce qu'**une plaque intermédiaire de renfort (22) est intercalée entre la surface intérieure d'un des flancs (58, 56) du longeron (12) et la partie de fixation (32, 42) de l'organe d'attelage (14, 16).

2. Agencement (10) selon la revendication précédente, **caractérisé en ce qu'**une face (54) de la plaque intermédiaire de renfort (22) est en appui sur une face interne (58) du longeron (12).

3. Agencement (10) selon la revendication 1, **caractérisé en ce que** la plaque intermédiaire de renfort (22) constitue une ailé d'une cornière (18) à section en L et dont les deux ailes (22, 24) sont en appui plan sur deux faces internes adjacentes (56, 58) du longeron (12), respectivement.

4. Agencement (10) selon la revendication précédente, **caractérisé en ce que** la plaque intermédiaire de renfort (22) et l'organe d'attelage (14, 16) sont liés par soudage et constituent un sous-ensemble (50) qui est ensuite agencé puis soudé à l'intérieur du longeron (12).

5. Agencement (10) selon la revendication précédente, **caractérisé en ce que** l'organe d'attelage (14) est un anneau situé à l'extérieur du longeron (12) et destiné à recevoir l'élément d'arrimage.

6. Agencement (10) selon la revendication 5, **caractérisé en ce que**, l'organe d'attelage (16) est une douille taraudée logée entièrement à l'intérieur du longeron (12) creux dont le taraudage (40) est destiné à recevoir l'élément de remorquage.

7. Agencement (10) selon les revendications 2, 6 et 7, **caractérisé en ce qu'**il comporte un anneau (14) et une douille taraudée (16) de remorquage qui sont fixés sur une plaque intermédiaire commune de renfort (22).

8. Agencement (10) selon la revendication 1, **caractérisé en ce qu'**il comporte un traitement par dépôt d'une couche de revêtement sur les faces internes (56, 58, 66) du longeron (12) qui recouvre la partie de l'organe d'attelage (14, 16) et de ses moyens de fixation situés à l'intérieur du longeron (12).

## Claims

1. Arrangement (10) for the fastening on a hollow beam (12) of the bodywork of a motor vehicle of a hitch element (14, 16) to a towing or anchoring member of the vehicle, of the type comprising a first fastening part (32, 42) fastened by welding relative to the beam (12), and a second coupling part (28, 40) designed to receive the towing or anchoring member, **characterized in that** the first fastening part (32, 42) is located inside the beam (12) and **in that** an intermediate reinforcing plate (22) is inserted between the inner surface of one of the sides (58, 56) of the beam (12) and the fastening part (32, 42) of the hitch element (14, 16).

2. Arrangement (10) according to the preceding claim, **characterized in that** one face (54) of the intermediate reinforcing plate (22) bears against an inner face (58) of the beam (12).

3. Arrangement (10) according to claim 1, **characterized in that** the intermediate reinforcing plate (22) forms a leg of an angle bracket (18) of L-shaped section and of which the two legs (22, 24) bear flat against two adjacent inner faces (56, 58) of the beam (12) respectively.

4. Arrangement (10) according to the preceding claim, **characterized in that** the intermediate reinforcing plate (22) and the hitch element (14, 16) are connected by welding and form a sub-assembly (50) which is then arranged on, and then welded to, the inside of the beam (12).

5. Arrangement (10) according to the preceding claim, **characterized in that** the hitch element (14) is a ring located outside the beam (12) and designed to receive the anchoring member.

6. Arrangement (10) according to claim 5, **characterized in that** the hitch element (16) is a tapped sleeve entirely housed inside the hollow beam (12) and of which the tapped portion (40) is designed to receive the towing member.

7. Arrangement (10) according to claims 2, 6 and 7, **characterized in that** it comprises a ring (14) and a tapped towing sleeve (16) which are fastened to a common intermediate reinforcing plate (22).

8. Arrangement (10) according to claim 1, **characterized in that** it comprises a treatment by depositing a covering layer onto the inner faces (56, 58, 66) of the beam (12) which covers the part of the hitch element (14, 16) and of its fastening means located inside the beam (12).

## Patentansprüche

1. Anordnung (10) zur Befestigung einer Kupplungseinrichtung (14, 16) für ein Anhänger- oder Kopplungselement des Fahrzeuges an einen hohlen Längsträger (12) eines Wagenkastens eines Kraftfahrzeuges, umfassend einen gegenüber dem Längsträger (12) festgeschweißten ersten Befestigungsteil (32, 42) und einen zweiten Anschlagteil (28, 40) zur Aufnahme des Anhänger- oder Kopplungselements,
**dadurch gekennzeichnet, dass** der erste Befestigungsteil (32, 42) sich innerhalb des Längsträgers (12) befindet und dass eine zwischengesetzte Verstärkungsplatte (22) zwischen der Innenfläche einer der Flanken (58, 56) des Längsträgers (12) und dem Befestigungsteil (32, 42) der Anschlageinrichtung (14, 16) angeordnet ist.

2. Anordnung (10) nach dem vorstehenden Anspruch, **dadurch gekennzeichnet, dass** eine Fläche (54) der zwischengesetzten Verstärkungsplatte (22) an einer Innenfläche (58) des Längsträgers (12) in Anlage ist.

3. Anordnung (10) nach Anspruch 1, **dadurch gekennzeichnet, dass** die zwischengesetzte Verstärkungsplatte (22) den Schenkel eines L-förmigen Winkeleisens (18) darstellt, dessen zwei Schenkel (22, 24) jeweils flächig an zwei aneinander angrenzenden Innenflächen (56, 58) des Längsträgers (12) anliegen.

4. Anordnung (10) nach dem vorstehenden Anspruch, **dadurch gekennzeichnet, dass** die zwischengesetzte Verstärkungsplatte (22) und die Anschlageinrichtung (14, 16) miteinander verschweißt sind und eine Baugruppe (50) bilden, die anschließend innerhalb des Längsträgers (12) angeordnet und dann angeschweißt wird.

5. Anordnung (10) nach dem vorstehenden Anspruch, **dadurch gekennzeichnet, dass** die Anschlageinrichtung (14) ein Ring ist, der sich außerhalb des Längsträgers (12) befindet und in dem das Kopplungselement aufnehmbar ist.

6. Anordnung (10) nach Anspruch 5, **dadurch gekennzeichnet, dass** die Anschlageinrichtung (16) eine mit einem Innengewinde versehene Hülse ist, die vollständig innerhalb des hohlen Längsträgers (12) untergebracht ist und in deren Innengewinde (40) das Anhängerelement aufnehmbar ist.

7. Anordnung (10) nach den Ansprüchen 2, 6 und 7, **dadurch gekennzeichnet, dass** sie einen Ring (14) und eine mit einem Innengewinde (16) versehene Anhängerhülse (16) aufweist, welche an einer gemeinsamen zwischengesetzten Verstärkungsplatte (22) befestigt sind.

8. Anordnung (10) nach Anspruch 1, **dadurch gekennzeichnet; dass** durch eine Behandlung eine Überzugschicht auf die Innenflächen (56, 58, 66) des Längsträgers (12) aufgebracht wird, die den Teil der Anschlageinrichtung (14, 16) und deren innerhalb des Längsträgers (12) befindlichen Befestigungsmittel bedeckt.
